# EUROPÄISCHE PATENTSCHRIFT

(11) **EP 4 081 389 B1**
(45) Veröffentlichungstag und Bekanntmachung des Hinweises auf die Patenterteilung: **19.06.2024**
(21) Anmeldenummer: 21703606.0
(22) Anmeldetag: 26.01.2021
(51) Int. Cl.: H01M 50/282, H01M 50/278, H01M 50/276, H01M 50/249, B32B 15/04, B32B 1/00, B29C 43/30, B29C 43/18, B29C 37/00, B29C 43/56, B29C 70/46, B29C 70/88, B29C 70/84, B29C 70/18, B32B 5/24, B32B 15/08, B29K 105/08, B29C 33/42

(54) **ABDECKSTRUKTUR UND SMC-WERKZEUG SOWIE VERFAHREN ZUM HERSTELLEN EINER DERARTIGEN ABDECKSTRUKTUR**
COVER STRUCTURE AND SMC MOLD, AND METHOD FOR PRODUCING SUCH A COVER STRUCTURE
STRUCTURE DE COUVERCLE ET MOULE SMC, ET PROCÉDÉ DE PRODUCTION D'UNE TELLE STRUCTURE DE COUVERCLE

(30) Priorität: 04.02.2020 DE 102020102790; 19.03.2020 DE 102020107675
(43) Veröffentlichungstag der Anmeldung: 02.11.2022
(73) Patentinhaber: Georg Fritzmeier GmbH & Co. KG, 85653 Aying (DE)
(72) Erfinder: FRAUNHOFER, Stephan, 85653 Aying (DE)
(74) Vertreter: Winter, Brandl - Partnerschaft mbB
(86) Internationale Anmeldenummer: PCT/EP2021/051675
(87) Internationale Veröffentlichungsnummer: WO 2021/156094

(56) Entgegenhaltungen:
- CN-A- 108 202 511
- CN-A- 109 301 124
- DE-A1-102016 211 254

## Beschreibung

Die Erfindung betrifft eine Abdeckstruktur, insbesondere für eine Batterie, sowie ein Sheet-Moulding-Compound (SMC)-Werkzeug und ein Verfahren zum Herstellen einer derartigen Abdeckstruktur.

Seit einigen Jahren besteht ein Trend dahingehend, Verbrennungsmotoren durch Elektromotoren zu ersetzen. Ein Problem dabei ist die Bereitstellung von hinreichender Batteriekapazität. Insbesondere bei mit Elektromotoren ausgeführten Kraftfahrzeugen müssen zur Gewährleistung einer zufriedenstellenden Reichweite Batterien mit großer Kapazität eingebaut werden. Diese werden häufig am Unterboden des Fahrzeugs befestigt und müssen dementsprechend gegen äußere Einflüsse geschützt werden. Derartige mit einem Unterfahrschutz ausgeführte Batterietragstrukturen sind beispielsweise in der DE 10 2011 005 403 A1 und der WO 2018/149762 A1 offenbart.

Dabei werden in der Regel die Batterien in einer Art Batteriekasten aufgenommen, über die die eigentliche Batterie zur Fahrbahn hin mittels eines Unterfahrschutzes geschützt ist. Der zur Karosserie/Fahrzeugkabine hinweisende Teil der Batterietragstruktur ist über geeignete Abdeckstrukturen abgedeckt. Diese müssen so ausgebildet sein, dass sie bei einem Brand der Batterie für eine bestimmte Zeit, beispielsweise fünf Minuten der Wärmeentwicklung standhalten, so dass ein Übergreifen auf die Fahrzeugkabine und sonstige Fahrzeugkomponenten verzögert wird.

Ein derartiger Batteriekasten, auch Batteriegehäuse genannt, ist in der Druckschrift DE 10 2010 043 899 A1 beschrieben. Bei dieser Lösung ist ein Batteriegehäuse mit einem Gehäusedeckel, der entsprechend einer Außenkontur einer Batteriezelle ausgebildet ist und einem Gehäuseboden ausgebildet, der an den haubenförmigen Gehäusedeckel angesetzt ist. Dieses Batteriegehäuse ist bei der bekannten Lösung aus einem schwer entzündlichen Kunststoff gefertigt.

Eine derartige Lösung hält einer längeren Wärmeentwicklung nicht stand.

In dem Dokument DE 10 2013 220 778 A1 ist ebenfalls ein aus Kunststoff gefertigtes Batteriegehäuse beschrieben, das die gleichen Nachteile wie die oben genannte Batteriegehäusestruktur aufweist.

In der gattungsfremden Druckschrift DE 10 2009 050 787 A1 ist ein aus Kunststoff bestehendes Flugzeugbauteil beschrieben, das zur Verbesserung des Brandverhaltens mit einer glimmerhaltigen Sperrschicht ausgeführt ist. Weiters sind Batteriekastendeckel aus CN 109 301 124 A bekannt.

Bekannt sind Lösungen, bei denen die beispielsweise als Batteriekastendeckel ausgeführten Abdeckstrukturen als SMC (Sheet-Moulded-Compound)-Bauteil gefertigt werden und der erforderliche Brandschutz dann durch nachträgliches Aufkleben einer Brandschutzschicht, beispielsweise von Glimmer-/Mikanitplatten erzielt wird.

Diese Vorgehensweise bedarf eines erheblichen fertigungstechnischen Aufwandes.

Demgegenüber liegt der Erfindung die Aufgabe zugrunde, eine Abdeckstruktur zu schaffen, die zum einen den brandschutztechnischen Anforderungen genügt und die sich zum anderen mit verringertem Aufwand herstellen lässt. Der Erfindung liegt des Weiteren die Aufgabe zugrunde, ein für die Herstellung einer derartigen Abdeckstruktur geeignetes SMC-Werkzeug sowie ein Verfahren zur Herstellung einer derartigen Abdeckstruktur zu schaffen.

Diese Aufgabe wird im Hinblick auf die Abdeckstruktur durch die Merkmalskombination des Patentanspruches 1, im Hinblick auf das System aus SMC-Werkzeug und Abdeckstruktur durch die Merkmale des nebengeordneten Patentanspruches 12 und im Hinblick auf das Verfahren durch die Merkmalskombination des weiteren nebengeordneten Patentanspruches 14 gelöst.

Vorteilhafte Weiterbildungen der Erfindung sind Gegenstand der Unteransprüche.

Die erfindungsgemäße Abdeckstruktur ist insbesondere zur Verwendung bei einer Batteriekastenwandung, vorzugsweise einer Batterieabdeckung vorgesehen. Diese Abdeckstruktur hat einen SMC-Grundkörper, der aus einem SMC-Rohling hergestellt ist und mit einer Brandschutzbeschichtung versehen ist. Diese ist vorzugsweise aus einem oder mehreren Formteil(en) ausgebildet und wird in einem SMC-Werkzeug mit dem SMC-Rohling verpresst.

Die Abdeckstruktur lässt sich somit in einem Arbeitsgang herstellen, so dass das Fertigungsverfahren gegenüber der herkömmlichen Lösung mit der Herstellung des SMC-Grundkörpers und dem anschließenden Belegen mit einer Brandschutzbeschichtung ganz erheblich vereinfacht ist.

Erfindungsgemäss ist die Brandschutzbeschichtung mit einer nach einem vorbestimmten Raster/Muster ausgeführten Perforation ausgeführt, wobei durch die Perforation gebildete Durchbrüche der Brandschutzbeschichtung so ausgelegt sind, dass eine Kunststoffmatrix des SMC-Aufbaus beim Verpressen und Anlegen von Vakuum durch diese Durchbrüche hindurch- oder zumindest in diese eintreten kann.

Die dann in die Durchbrüche eintretende Kunststoffmatrix ermöglicht eine präzise Lagepositionierung und Verbindung zwischen dem Formteil (Brandschutzbeschichtung) und dem SMC-Grundkörper.

Die Perforation ermöglicht es weiterhin, das Vakuum durch diese hindurch auszubilden, so dass die Brandschutzbeschichtung eine Art Siebplatte darstellt.

Die Verbindung lässt sich weiter verbessern, wenn die Durchbrüche in ihren Leibungsflächen gezielt hergestellte Unebenheiten aufweisen, die ausgelegt sind, einen Form-/Kraftschluss mit ausgehärteter Matrix auszubilden.

Alternativ oder zusätzlich können im Mündungsbereich dieser Durchbrüche Grate ausgebildet sein, die ebenfalls ausgelegt sind, um eine form-/kraftschlüssige Verbindung mit der ausgehärteten Matrix auszubilden.

Bei einer Lösung ist das zumindest eine Formteil der Brandschutzschicht mit einer Verbindungsschicht ausgeführt, die ausgelegt ist, beim Verpressen eine Verbindung mit dem SMC-Grundkörper bzw. dem SMC-Rohling auszubilden. Die Verbindungsschicht kann alternativ oder zusätzlich zu dem Kraft-/Formschluss über die Durchbrüche oder Befestigungspilze vorgesehen werden.

Diese Verbindung ist besonders einfach herstellbar, wenn die Verbindungsschicht mit einem Pulverbinder ausgeführt ist, der während des SMC-Pressvorgangs bei der üblicherweise erhöhten Formtemperatur und dem anliegenden Vakuum aufgeschmolzen/erweicht wird und somit nach dem Aushärten eine zuverlässige Anbindung der Brandschutzbeschichtung an den SMC-Grundkörper gewährleistet.

Die Herstellung dieses Formteils ist besonders einfach, wenn die Verbindungsschicht aufgesintert ist.

Erfindungsgemäß wird es bevorzugt, wenn die Brandschutzbeschichtung im Wesentlichen aus Glimmerplatten/Mikanitplatten gebildet ist. Dabei wird die Brandschutzbeschichtung vorzugsweise aus einer Vielzahl derartiger Platten zusammengesetzt.

Zur Verbesserung der elektromagnetischen Verträglichkeit (EMV) und somit zur Abschirmung gegenüber anderen Antriebs- und Steuerungs-/Regelelementen des Fahrzeugs kann die Abdeckstruktur mit einer EMV-Schicht ausgeführt sein.

Bei einem besonders einfach aufgebauten Ausführungsbeispiel ist diese EMV-Schicht als Aluminiumkaschierung ausgeführt, die die Abdeckstruktur oder den SMC-Grundkörper überdeckt.

Die Herstellung ist besonders einfach, wenn die entsprechend der Geometrie des SMC-Grundkörpers ausgeführte EMV-Schicht/-Kaschierung mit dem Grundkörper verklebt wird.

Das Verkleben erfolgt vorzugsweise zeitnah nach dem Entformen des SMC-Grundkörpers, da dieser dann bereits auf eine geeignete Klebetemperatur erwärmt wird.

Insbesondere bei Automotive-Anwendungen wird es bevorzugt, wenn die EMV-Schicht auf der von der Brandschutzbeschichtung abgewandten Seite des SMC-Grundkörpers aufgebracht ist.

Ein für die Herstellung einer vorbeschriebenen Abdeckstruktur geeignetes SMC-Werkzeug hat ein Oberwerkzeug und ein Unterwerkzeug, deren Formflächen gemeinsam eine Kavität zum Ausformen der Abdeckstruktur begrenzen, wobei in einer Formfläche, vorzugsweise in der Formfläche des Unterwerkzeugs, mit den Durchbrüchen fluchtende Taschen ausgebildet sein können, die von einem Umfangsrand der Durchbrüche abschnittsweise überdeckt sind.

Durch diese Überdeckung wird beim Verpressen eine Überschneidung ausgebildet, die von der Matrix lokal hinterströmt wird und somit eine Art Befestigungspilz ausbildet, der zur präzisen Lagefixierung der Brandschutzbeschichtung mit Bezug zum SMC-Grundkörper beiträgt. Während des Verpressens wird die Brandschutzbeschichtung durch den Fließdruck der Matrix gegen die Formflächen des Werkzeugs gedrückt, so dass ein Verrutschen vor Ausbildung der genannten Befestigungspilze verhindert ist.

Diese Überdeckung wird vorzugsweise größer als die Wandstärke der Brandschutzbeschichtung ausgeführt.

Gemäß dem erfindungsgemäßen Verfahren zum Herstellen einer derartigen Abdeckstruktur wird das zumindest eine, vorzugsweise eine Vielzahl von die Brandschutzbeschichtung ausbildenden Formteilen in ein SMC-Werkzeug eingebracht, insbesondere auf der Formfläche des Unterwerkzeugs positioniert. Vor oder nach diesem Einlegen der Formteile wird der SMC-Rohling (auch SMC-Paket genannt) im Werkzeug positioniert und anschließend durch Schließen der Werkzeughälften (Oberwerkzeug/Unterwerkzeug) und Anlegen von Vakuum der SMC-Rohling mit den die Brandschutzbeschichtung ausbildenden Formteilen zu der Abdeckstruktur bzw. einem SMC-Grundkörper verpresst.

Bei einer alternativen Lösung wird die Brandschutzbeschichtung und die EMV-Schicht gemeinsam in einem Arbeitsgang mit dem SCM-Grundkörper verklebt. Dies kann beispielsweise in einem Klebewerkzeug erfolgen, in das der SMC-Grundkörper, die Brandschutzbeschichtung (Glimmerplatte) und die EMV-Schicht (umgeformte Aluminiumfolie) eingelegt werden.

Bevorzugte Ausführungsbeispiele der Erfindung werden im Folgenden anhand schematischer Zeichnungen näher erläutert. Es zeigen:
Figur 1 eine Prinzipdarstellung eines geöffneten SMC-Werkzeugs mit einem SMC-Rohling und einer Brandschutzbeschichtung gemäß einem ersten Ausführungsbeispiel;
Figur 2 eine Detaildarstellung eines Bereiches der Brandschutzbeschichtung gemäß einem zweiten Ausführungsbeispiel;
Figur 3 einen Schnitt durch eine Abdeckstruktur beim Verpressen der Komponenten gemäß Figur 2;
Figur 4 ein Detail B aus Figur 3;
Figur 5 eine Figur 4 entsprechende Darstellung des ersten Ausführungsbeispiels, bei dem ein Befestigungspilz ausgebildet ist;
Figur 6 ein drittes Ausführungsbeispiel, bei dem die Brandschutzbeschichtung mit einer Verbindungsschicht ausgeführt ist;
Figur 7 eine Abdeckstruktur nach dem Entformen aus dem SMC-Werkzeug;
Figur 8 eine Prinzipdarstellung eines Arbeitsschrittes, bei dem auf die Abdeckstruktur gemäß Figur 7 eine EMV-Schicht aufgebracht ist;
Figur 9 eine Darstellung einer mit der EMV-Beschichtung ausgeführten Abdeckstruktur und
Figur 10 das Detail C aus Figur 9.

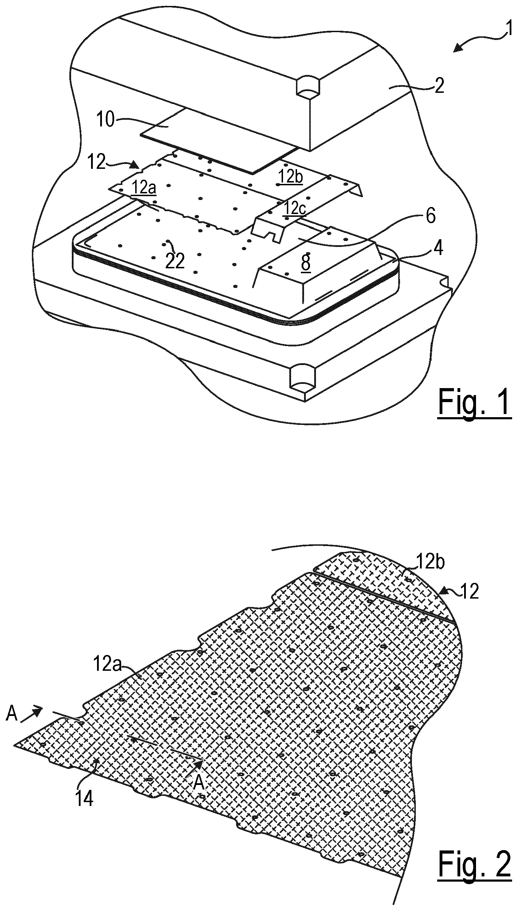

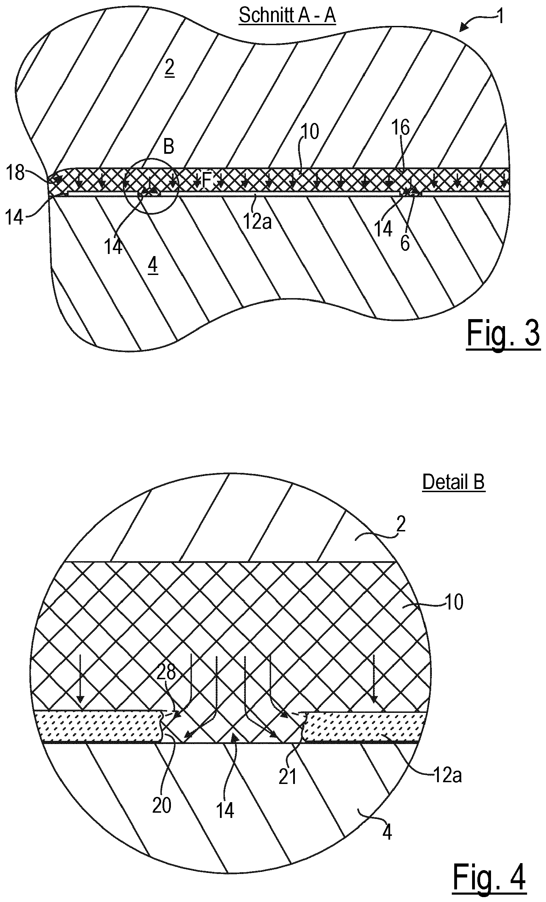

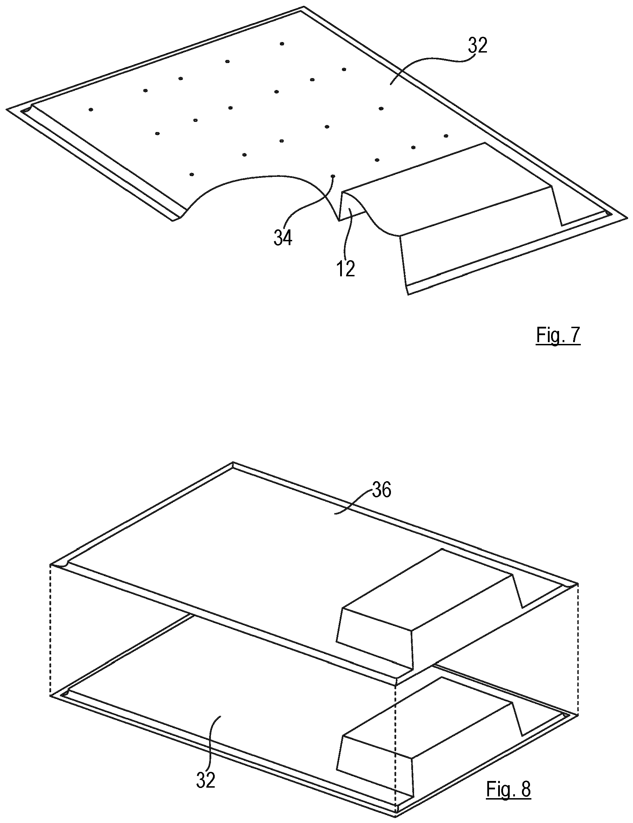

Figur 1 zeigt den prinzipiellen Aufbau einer SMC-Fertigungseinheit mit einem von einer nicht dargestellten SMC-Presse betätigten SMC-Werkzeug 1 mit einem Oberwerkzeug 2 und einem Unterwerkzeug 4, die in der Darstellung gemäß Figur 1 auseinandergefahren sind. In dem Unterwerkzeug 4 (und entsprechend auch im Oberwerkzeug 2) sind Formflächen 6, 16 (siehe Figur 3) ausgebildet, die in geschlossenem Zustand eine Kavität zum Ausformen einer Abdeckstruktur eines Batteriekastens ausbilden. Diese Abdeckstruktur, beispielsweise ein Batteriedeckel, ist in Figur 7 dargestellt, auf die wir später zurückkommen. Die Formflächen 6, 16 sind entsprechend der Geometrie dieser Abdeckstruktur als 3D-Fläche ausgebildet. Beim dargestellten Ausführungsbeispiel wölbt sich die Formfläche 6 in dem in Figur 1 rechten Bereich nach oben, hin zum Oberwerkzeug 2 aus, so dass eine Auswölbung 8 ausgebildet ist, die im montierten Zustand eine Komponente des Fahrzeugs, beispielsweise einem Tank oder dergleichen überdeckt. Im Werkzeugoberteil 2 ist dann eine entsprechende Einwölbung vorgesehen, so dass beim Schließen des SMC-Werkzeugs 1 eine Hutze ausgebildet wird.

In das geöffnete SMC-Werkzeug 1 wird ein SMC-Rohling 10 sowie eine Brandschutzbeschichtung 12 eingelegt. Beim dargestellten Ausführungsbeispiel ist die Brandschutzbeschichtung 12 mehrteilig aus Glimmerplatten 12a, 12b, 12c ausgebildet, die beim dargestellten Ausführungsbeispiel auf die Formfläche 6 aufgelegt werden. Die Glimmerplatte 12c überdeckt dabei die Hutze ausbildende Auswölbung 8. Dementsprechend sind die Glimmerplatten 12a, 12b, 12c entsprechend der Kontur der Formflächen 6 bzw. der auszuformenden Abdeckstruktur ausgebildet.

Der SMC-Rohling 10 besteht beispielsweise aus einer Fasermatte, einem Faserflies oder dergleichen, das von einer Kunststoffmatrix, beispielsweise einem Polyester- oder Vinylesterharz, umgeben ist, die dann beim Verpressen und dem Anlegen von Vakuum in dem auf die Umform-/Schmelztemperatur erwärmten SMC-Werkzeug 1 aufschmilzt, so dass der SMC-Rohling 10 in die vorbestimmte Geometrie des SMC-Grundkörpers 32 umgeformt werden kann und nach dem Aushärten/Entformen diese 3D-Geometrie beibehält.

Nicht dargestellt in Figur 1 sind sonstige Komponenten/Einlegeteile, die in das SMC-Werkzeug 1 eingebracht werden und über die die Abdeckstruktur beispielsweise am Batteriekasten oder dergleichen montiert werden kann.

Hinsichtlich weiterer Details zu dem SMC-Verfahren sei auf die umfangreiche Fachliteratur verwiesen, so dass hier nur auf die zum Verständnis der Erfindung wesentlichen Details eingegangen werden muss.

Figur 2 zeigt eine Teildarstellung eines zweiten Ausführungsbeispiels von Glimmerplatten 12a, 12b der Brandschutzbeschichtung 12, bei denen ein Abstand von Durchbrüchen 14 etwas enger als in Figur 1 gewählt ist - hierauf wird noch später eingegangen. Wie vorstehend ausgeführt, sind die Glimmerplatten 12a, 12b entsprechend der Kontur der Formfläche 6 bzw. der Abdeckstruktur ausgebildet und decken die bei einer Hitzeentwicklung gefährdeten Bereiche der Abdeckstruktur ab. Beim dargestellten Ausführungsbeispiel sind die Glimmerplatten 12a, 12b, 12c mit einer Perforation versehen, die durch die oben genannten Durchbrüche 14 ausgebildet ist, die nach einem vorbestimmten Raster das plattenförmige Material der Glimmerplatten 12a, 12b, 12c durchsetzen. Diese Durchbrüche 14 sind derart ausgebildet, dass beim Verpressen der Schichten die Kunststoffmatrix in diese Durchbrüche 14 eintreten kann. Dabei werden die Glimmerplatten 12a, 12b, 12c durch den Fließdruck und auch das anliegende Vakuum gegen die Formfläche 6 gedrückt und gezogen und somit zuverlässig lagefixiert. In Figur 2 ist eine Schnittlinie A-A eingezeichnet, die etwa den Schnittverlauf durch den in Figur 3 dargestellten Aufbau zeigt.

Figur 3 zeigt eine Teildarstellung des SMC-Werkzeugs 1 beim Verpressen. Dementsprechend sind das Oberwerkzeug 2 und das Unterwerkzeug 4 in den Schließzustand verfahren, so dass die Formfläche 6 des Unterwerkzeugs 4 und eine Formfläche 16 des Oberwerkzeugs 2 die vorgenannte Kavität 18 ausbilden, in der der SMC-Rohling 10 und die Brandschutzbeschichtung 12 mit den Glimmerplatten 12a, 12b, 12c etc. aufgenommen sind. In dieser Darstellung sieht man zwei der Durchbrüche 14 der Glimmerplatte 12a. Beim Verpressen (Schließen des Werkzeugs 1, Anlegen von Vakuum und Temperaturerhöhung) werden - wie vorstehend erwähnt - die Glimmerplatten 12a, 12b, 12c durch die Fließkräfte F gegen die Formfläche 6 gedrückt. Die beim Verpressen aufgeschmolzene Kunststoffmatrix fließt dann, wie mit den Doppelpfeilen dargestellt, in die Durchbrüche 14 ein.

Wie im Detail B in Figur 4 dargestellt, ist die Leibung 20 jedes Durchbruches 14 der Brandschutzbeschichtung 12 nicht glattflächig sondern mit bewusst ausgebildeten Unebenheiten 21, beispielsweise Riefen oder Erhöhungen, ausgebildet, in die die Kunststoffmatrix einfließt und somit lokale Hinterschneidungen ausbildet, die beim Aushärten der Kunststoffmatrix dafür sorgen, dass der aus dem SCM-Rohling 10 ausgebildete SMC-Grundkörper 32 kraft- und formschlüssig mit der Brandschutzbeschichtung 12 verbunden ist. Dieses Eintreten der Kunststoffmatrix in den Bereich der Durchbrüche 14 trägt zur weiteren Relativpositionierung der Glimmerplatten 12a, 12b, 12c mit Bezug zu dem SMC-Rohling 10 (SMC-Paket) bei.

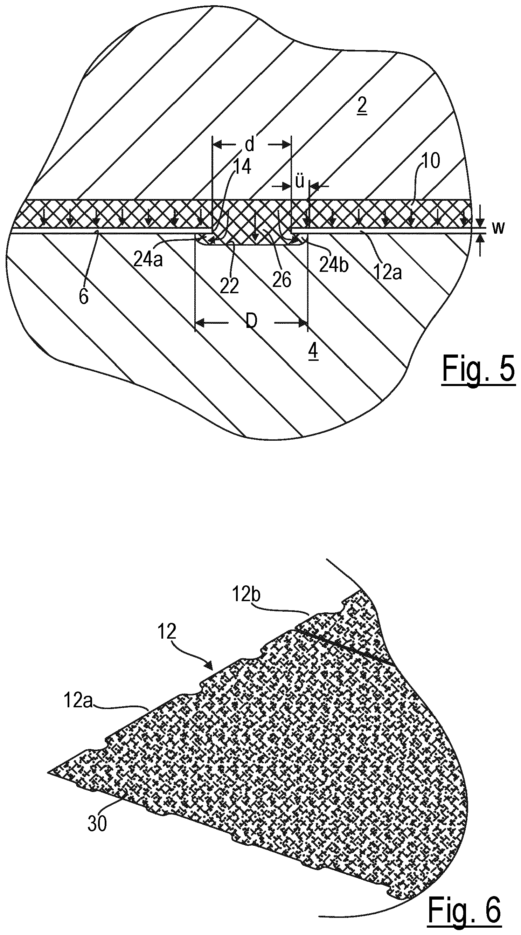

Figur 5 zeigt eine Variante, bei der diese Relativpositionierung zwischen den Glimmerplatten 12a, 12b, 12c und dem SMC-Rohling 10 noch weiter verbessert ist. Bei diesem ersten Ausführungsbeispiel sind in der Formfläche 6 Taschen 22 ausgebildet, die mit Bezug zu den Durchbrüchen 14 ausgerichtet sind. Dementsprechend ist das in Figur 1 dargestellte Raster der Taschen 22 auf der Formfläche 6 entsprechend des Rasters der Perforation der Brandschutzbeschichtung 12 ausgebildet. Die Breite oder der Durchmesser D der Taschen 22 ist jedoch größer als die Breite/der Durchmesser d der Durchbrüche 14 ausgebildet, so dass bei identischer Ausgestaltung der Raster die Randbereiche der Durchbrüche 14 die Tasche 22 abschnittsweise überdecken.

Wie in Figur 5 dargestellt, ist die Überdeckung ü so ausgelegt, dass sie größer ist als die Wandstärke w der Brandschutzbeschichtung 12 bzw. der Glimmerplatten 12a, 12b, 12c.

Dementsprechend wird eine Hinterschneidung 24a, 24b ausgebildet, in die die Kunststoffmatrix beim Verpressen einfließt und somit eine Art Befestigungspilz 26 ausbildet, durch den die Glimmerplatten 12a, 12b, 12c und der SMC-Rohling 10 bzw. der SMC-Grundkörper 32 nach dem Aushärten kraft- und formschlüssig mit einander verbunden sind.

Zur weiteren Verbesserung der Verbindung zwischen dem SMC-Grundkörper 32 und der Brandschutzbeschichtung 12 können auch die Leibungen 20 der Durchbrüche 14 mit den Unebenheiten 21 ausgeführt sein.

Durch die Ausbildung der Befestigungspilze 26 ist es möglich, das Raster der Durchbrüche 14 beim ersten Ausführungsbeispiel gemäß Figur 5 größer (siehe auch Figur 1) als das Raster der Durchbrüche 14 beim zweiten Ausführungsbeispiel gemäß den Figuren 2 und 3 auszuführen, da dort lediglich die vergleichsweise kleinen Unebenheiten 21 den Formschluss ausbilden. Dieser Formschluss kann noch verbessert werden, wenn alternativ oder zusätzlich im Bereich des Umfangsrandes jedes Durchbruches 14 ebenfalls Hinterschneidungen ausbildende Grate 28 oder dergleichen ausgebildet werden. Diese Grate 28 sind in Figur 4 gestrichelt angedeutet.

Die Ausbildung der Taschen 22 in den Formflächen 6 oder 16 des Unterwerkzeugs 4 bzw. des Oberwerkzeugs 2 und/oder der Durchbrüche 14 in der Brandschutzbeschichtung 12 ist relativ aufwendig. Der vorrichtungstechnische und fertigungstechnische Aufwand lassen sich gemäß Figur 6 verringern, wenn die Brandschutzbeschichtung 12, beim dargestellten dritten Ausführungsbeispiel die Glimmerplatten 12a, 12b, 12c, mit einem Pulververbinder 30 versehen werden. Dabei kann es sich um einen aufgesinterten Pulververbinder 30 handeln, dessen Material so gewählt ist, dass es beim Verpressen aufgrund der erhöhten Werkzeugtemperatur und des Vakuums in der Kavität 18 aufgeschmolzen wird und somit eine innige Verbindung mit dem SMC-Grundkörper 32 bzw. dem SMC-Rohling 10 ausbildet. Dementsprechend ist dieser Pulververbinder 30 an der zum SMC-Rohling 10 hin weisenden Großfläche der Brandschutzbeschichtung 12 ausgebildet.

Der Vorteil der vorbeschriebenen Ausführungsbeispiele ist, dass in einem einstufigen Prozess der in Figur 7 dargestellte SMC-Grundkörper 32 als komplexe 3D-Struktur mit der Brandschutzbeschichtung 12 - im vorliegenden Fall den Glimmerplatten 12a, 12b, 12c - ausgebildet werden kann. Mit diesem Verpressen im SMC-Werkzeug 1 werden auch in dem SMC-Rohling 10 (SMC-Paket) oder in die Kavität 18 eingelegte Komponenten, wie beispielsweise Befestigungsbuchsen 34, in den SMC-Aufbau bzw. in die Abdeckstruktur integriert, ohne dass es einer zusätzlichen Bearbeitung bedarf. Auf diese Weise lassen sich durch den einstufigen Prozess auch für große Batteriekapazitäten geeignete formstabile und Brandschutzvorschriften genügende Abdeckungen herstellen, die eine Fläche von deutlich mehr als 1 m² aufweisen können.

Zur Verbesserung der EMV kann auf den in Figur 7 dargestellten SMC-Grundkörper 32 auf der von der Brandschutzbeschichtung abgewandten Großfläche eine EMV-Schicht (Kaschierung) aufgebracht werden. Beim dargestellten Ausführungsbeispiel ist diese EMV-Schicht aus einer Aluminiumfolie/-kaschierung 36 ausgebildet, die in einem Umformwerkzeug entsprechend der 3D-Geometrie des SMC-Grundkörpers 32 umgeformt wird. Diese Aluminiumfolie 36 wird dann an der zum SMC-Grundkörper 32 gewandten Großfläche mit einer Kleberschicht versehen.

In einem anschließenden Arbeitsgang wird der mit der Brandschutzbeschichtung 12 verpresste SMC-Grundkörper 32 aus dem SMC-Werkzeug 1 entformt und mit der Entformungstemperatur in eine Klebepresse oder ein sonstiges Klebewerkzeug verbracht, die Aluminiumfolie 36 aufgelegt und dann mit dem SMC-Grundkörper 32 verpresst, so dass nach diesem Arbeitsgang eine Abdeckstruktur 38, beispielsweise ein Batteriedeckel eines Batteriekastens ausgebildet ist, der zur Fahrzeugkabine hin mit der EMV-Schicht und zur Batterie hin mit der Brandschutzbeschichtung 12 versehen ist.

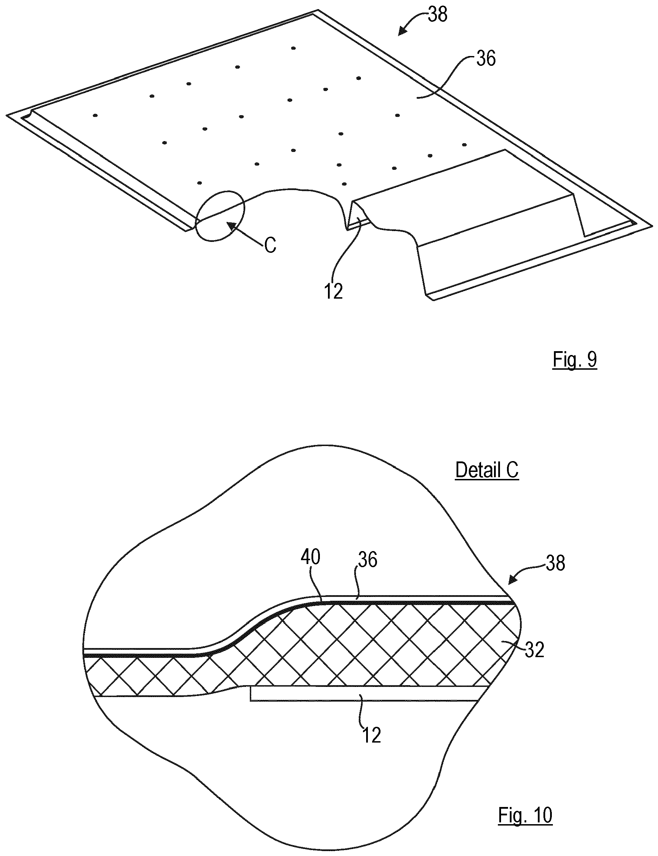

Figur 10 zeigt das Detail C in Figur 9, d.h. den Schichtaufbau der Abdeckstruktur 38 mit der oben (Ansicht nach Figur 10) liegenden Aluminiumfolie 36, die über eine Klebefuge 40 flächig mit dem SMC-Grundkörper 32 verbunden ist. Dieser ist wiederum in der vorbeschriebenen Weise kraft-/formschlüssig mit der Brandschutzbeschichtung 12, beispielsweise den Glimmerplatten 12a, 12b, 12c verbunden, so dass ein homogener Schichtaufbau gewährleistet ist, der im Hinblick auf die EMV-Problematik, die Brandschutzbeständigkeit und die mechanische Festigkeit optimiert ist.

Offenbart sind eine Abdeckstruktur, ein SMC-Werkzeug sowie ein Verfahren zum Herstellen einer Abdeckstruktur, die einen SMC-Grundkörper aufweist, der in einem SMC-Werkzeug mit einer Brandschutzbeschichtung verpresst ist.

### Bezugszeichenliste:

- 1: SMC-Werkzeug
- 2: Oberwerkzeug
- 4: Unterwerkzeug
- 6: Formfläche
- 8: Auswölbung
- 10: SMC-Rohling
- 12: Brandschutzbeschichtung
- 12a: Glimmerplatte
- 12b: Glimmerplatte
- 12c: Glimmerplatte
- 14: Durchbruch
- 16: Formfläche
- 18: Kavität
- 20: Leibung
- 21: Unebenheit
- 22: Tasche
- 24: Hinterschneidung
- 26: Befestigungspilz
- 28: Grat
- 30: Pulververbinder
- 32: SMC-Grundkörper
- 34: Befestigungsbuchse
- 36: Aluminiumfolie / -kaschierung
- 38: Abdeckstruktur
- 40: Klebefuge

## Patentansprüche

1. Abdeckstruktur, insbesondere für eine Batterie, mit einem SMC-Grundkörper (32), der mit einer Brandschutzbeschichtung (12) versehen ist, **dadurch gekennzeichnet, dass** die aus zumindest einem Formteil ausgeführte Brandschutzbeschichtung (12) und ein den SMC-Grundkörper (32) bildender SMC-Rohling (10) in einem SMC-Werkzeug (1) verpresst sind, wobei die Brandschutzbeschichtung (12) eine Perforation nach einem vorbestimmten Raster hat, wobei durch die Perforation gebildete Durchbrüche (14) derart ausgelegt sind, dass eine Kunststoffmatrix des SMC-Rohlings (10) beim Verpressen durch die Durchbrüche (14) hindurch treten oder in diese eintreten kann.

2. Abdeckstruktur nach Patentanspruch 1, wobei die Durchbrüche (14) in ihrer Leibung (20) Unebenheiten (21) aufweisen, die ausgelegt sind, einen Form-/Kraftschluss mit ausgehärteter Kunststoffmatrix auszubilden.

3. Abdeckstruktur nach Patentanspruch 1 oder 2 wobei in einem Umfangsbereich der Durchbrüche (14) Grate (28) ausgebildet sind, die ausgelegt sind, um einen Form-/Kraftschluss mit ausgehärteter Kunststoffmatrix auszubilden.

4. Abdeckstruktur nach einem der vorhergehenden Patentansprüche, wobei das die Brandschutzbeschichtung (12) ausbildende Formteil mit einer Verbindungsschicht versehen ist, die ausgelegt ist, beim Verpressen eine Verbindung mit den SMC-Grundköper (32) bzw. dem SMC-Rohling (10) auszubilden.

5. Abdeckstruktur nach Patentanspruch 4, wobei die Verbindungsschicht ein Pulverbinder (30) ist, der ausgelegt ist, im SMC-Werkzeug (1) aufgeschmolzen oder erweicht zu werden.

6. Abdeckstruktur nach Patentanspruch 4 oder 5, wobei die Verbindungsschicht aufgesintert ist.

7. Abdeckstruktur nach einem der vorhergehenden Patentansprüche, wobei die Brandschutzbeschichtung (12) im Wesentlichen aus Glimmerplatten (12a, 12b, 12c) besteht.

8. Abdeckstruktur nach einem der vorhergehenden Patentansprüche, mit einer EMV-Schicht.

9. Abdeckstruktur nach Patentanspruch 8, wobei die EMV-Schicht eine Aluminiumkaschierung (36) ist.

10. Abdeckstruktur nach Patentanspruch 8 oder9, wobei die EMV-Schicht mit dem SMC-Grundkörper (32) verklebt ist.

11. Abdeckstruktur nach einem der Patentansprüche 8 bis 10, wobei die EMV-Schicht auf der von der Brandschutzbeschichtung (12) abgewandten Großfläche des SMC-Grundkörpers (32) angeordnet ist.

12. Anordnung eines SMC-Werkzeugs zum Herstellen und in Kombination mit einer SMC-Abdeckstruktur (38) nach einem der vorhergehenden Patentansprüche, mit einem Oberwerkzeug (2) und einem Unterwerkzeug (4), deren Formflächen (6, 16) gemeinsam eine Kavität (18) zum Ausformen eines SMC-Grundkörpers (32) begrenzen, wobei in einer Formfläche (6, 16), vorzugsweise in der Formfläche (6) des Unterwerkzeugs (4) mit den Durchbrüchen (14) fluchtende Taschen (22) ausgebildet sind, die von einem Umfangsrand der Durchbrüche (14) abschnittsweise überdeckt sind.

13. SMC-Werkzeug nach Patentanspruch 13, wobei die Überdeckung (ü) größer als die Wandstärke (w) der Brandschutzbeschichtung (12) ist.

14. Verfahren zum Herstellen einer Abdeckstruktur nach einem der Patentansprüche 1 bis 12, mit den Schritten:
- Einlegen von eine Brandschutzbeschichtung (12) ausbildenden Formteilen in ein SMC-Werkzeug (1), wobei die Brandschutzbeschichtung (12) benachbart zu einem Unterwerkzeug (4) oder einem Oberwerkzeug (2) ist,
- Einlegen eines SMC-Rohlings (10) in das SMC-Werkzeug (1), und
- Verpressen des SMC-Rohlings (10) mit der Brandschutzbeschichtung (12) zu einem SMC-Grundkörper (32), wobei die Brandschutzbeschichtung (12) Durchbrüche (14) und in einer Formfläche mit den Durchbrüchen der Brandschutzbeschichtung fluchtende Taschen (22) aufweist, so dass eine Kunststoffmatrix des SMC-Rohlings (10) beim Verpressen durch die Durchbrüche (14) und in die Taschen (22) eintritt.

15. Verfahren zum Herstellen einer Abdeckstruktur nach Patentanspruch 14, mit dem Schritt:
- Aufbringen einer EMV-Schicht auf den SMC-Grundkörper (32).

16. Verfahren zum Herstellen einer Abdeckstruktur nach Patentanspruch 15, wobei das Aufbringen ein Verkleben ist, das zeitnah nach dem Entformen des SMC-Grundkörpers (32) aus dem SMC-Werkzeug (1) erfolgt.

## Claims

1. A cover structure, in particular for a battery, having an SMC main body (32) provided with a flame retardant coating (12), **characterized in that** the flame retardant coating (12) realized from at least one molded part, and an SMC blank (10) forming the SMC main body (32) are pressed together in an SMC mold, wherein the flame retardant coating (12) has a perforation in accordance with a predetermined grid, wherein openings (14) formed by the perforation are designed in such a way that a plastic matrix of the SMC blank (10) can pass through or enter said openings (14) during the pressing together.

2. The cover structure according to patent claim 1, wherein the openings (14) in their reveal (20) comprise unevennesses (21) which are designed to form a positive / non-positive locking with the cured plastic matrix.

3. The cover structure according to patent claim 1 or 2, wherein burrs (28) are formed in a peripheral region of the openings (14) which are designed to form a positive / non-positive locking with the cured matrix.

4. The cover structure according to any one of the preceding claims, wherein the molded part forming the flame retardant coating (12) is provided with a connection layer which is designed to form a connection with the SMC main body (32) and / or the SMC blank (10) during the pressing together.

5. The cover structure according to patent claim 4, wherein the connection layer is a powder binder (30) which is designed to be melted or softened in the SMC mold (1).

6. The cover structure according to patent claim 4 or 5, wherein the connection layer is sinter-fused.

7. The cover structure according to any one of the preceding claims, wherein the flame retardant coating (12) is essentially formed from mica sheets (12a, 12b, 12c).

8. The cover structure according to any one of the preceding claims with an EMC layer.

9. The cover structure according to patent claim 8, wherein the EMC layer is an aluminium lamination (36).

10. The cover structure according to patent claim 8 or 9, wherein the EMC layer is adhesively bonded to the SMC main body (32).

11. The cover structure according to any one of claims 8 to 10, wherein the EMC layer is disposed on the large surface of the SMC main body (32) facing away from the flame retardant coating (12).

12. Arrangement of an SMC mold for producing and in combination with an SMC cover structure (38) according to any one of the preceding claims with an upper mold (2) and a lower mold (4), the molding surfaces (6,16) of which together delimit a cavity (18) for molding an SMC main body (32), wherein in a molding surface (6,16), preferably in the molding surface (6) of the lower mold, pockets (22) aligned with the openings (14) are formed which are covered in sections by a peripheral edge of the openings (14).

13. The SMC mold according to patent claim 13, wherein the covering (ü) is larger than the wall thickness (w) of the flame retardant coating (12).

14. A method for producing a cover structure according to any one of patent claims 1 to 12 with the following steps:
- insertion of molded parts forming a flame retardant coating (12) into an SMC mold (1), wherein the flame retardant coating (12) is adjacent to a lower mold (4) or an upper mold (2),
- insertion of an SMC blank (10) into the SMC mold (1), and
- pressing together the SMC blank (10) with the flame retardant coating (12) to form an SMC main body (32), wherein the flame retardant coating (12) has openings (14) and pockets (22) aligned with the apertures of the flame retardant coating in a mold surface, so that a plastic matrix of the SMC blank (10) enters through the openings (14) and into the pockets (22) during pressing.

15. The method for producing a cover structure according to patent claim 14, with the step of:
- application of an EMC layer on the SMC main body (32).

16. The method for producing a cover structure according to patent claim 15, wherein the application is an adhesive bonding which is performed promptly after the demolding of the SMC main body (32) from the SMC mold (1).

## Revendications

1. Structure de recouvrement, en particulier pour une batterie, comprenant un corps de base SMC (32) qui est pourvu d'un revêtement de protection incendie (12), **caractérisée en ce que** le revêtement de protection incendie (12) réalisé à partir d'au moins une pièce moulée et une ébauche SMC (10) formant le corps de base SMC (32) sont pressés dans un outil SMC (1), dans laquelle le revêtement de protection incendie (12) présente une perforation selon une grille prédéterminée, dans laquelle les percées formées par la perforation sont conçues de telle manière qu'une matrice en matière plastique de l'ébauche SMC (10) peut passer à travers les percées (14) ou pénétrer dans celles-ci lors du pressage.

2. Structure de recouvrement selon la revendication 1, dans laquelle les percées (14) présentent dans leur jambage (20) des irrégularités (21) qui sont conçues pour former une liaison par complémentarité de formes/à force avec une matrice en matière plastique durcie.

3. Structure de recouvrement selon la revendication 1 ou 2, dans laquelle des crêtes (28) sont formées dans une zone périphérique des percées (14), crêtes qui sont conçues pour former une liaison par complémentarité de formes/à force avec une matrice en matière plastique durcie.

4. Structure de recouvrement selon l'une quelconque des revendications précédentes, dans laquelle la pièce moulée formant le revêtement de protection incendie (12) est pourvue d'une couche de liaison qui est conçue pour former une liaison avec le corps de base SMC (32) ou l'ébauche SMC (10) lors du pressage.

5. Structure de recouvrement selon la revendication 4, dans laquelle la couche de liaison est un liant en poudre (30) qui est conçu pour être fondu ou ramolli dans l'outil SMC (1).

6. Structure de recouvrement selon la revendication 4 ou 5, dans laquelle la couche de liaison est frittée.

7. Structure de recouvrement selon l'une quelconque des revendications précédentes, dans laquelle le revêtement de protection incendie (12) se compose sensiblement de plaques de mica (12a, 12b, 12c).

8. Structure de recouvrement selon l'une quelconque des revendications précédentes, comprenant une couche EMV.

9. Structure de recouvrement selon la revendication 8, dans laquelle la couche EMV est une stratification d'aluminium (36).

10. Structure de recouvrement selon la revendication 8 ou 9, dans laquelle la couche EMV est collée au corps de base SMC (32).

11. Structure de recouvrement selon l'une quelconque des revendications 8 à 10, dans laquelle la couche EMV est disposée sur la grande surface opposée au revêtement de protection incendie (12) du corps de base SMC (32).

12. Agencement d'un outil SMC pour la fabrication et en association avec une structure de recouvrement SMC (38) selon l'une quelconque des revendications précédentes, avec un outil supérieur (2) et un outil inférieur (4) dont les surfaces de moulage (6, 16) délimitent ensemble une cavité (18) pour le moulage d'un corps de base SMC (32), dans lequel des poches (22) alignées avec les percées (14), qui sont recouvertes par sections par un bord périphérique des percées (14), sont formées dans une surface de moulage (6, 16), de préférence dans la surface de moulage (6) de l'outil inférieur (4).

13. Outil SMC selon la revendication 13, dans lequel le recouvrement (ü) est plus grand que l'épaisseur de paroi (w) du revêtement de protection incendie (12).

14. Procédé de fabrication d'une structure de recouvrement selon l'une quelconque des revendications 1 à 12, comprenant les étapes consistant à :
- introduire des pièces moulées formées par un revêtement de protection incendie (12) dans un outil SMC (1), dans lequel le revêtement de protection incendie (12) est adjacent à un outil inférieur (4) ou à un outil supérieur (2),
- introduire une ébauche SMC (10) dans l'outil SMC (1), et
- presser l'ébauche SMC (10) avec le revêtement de protection incendie (12) pour former un corps de base SMC (32), dans lequel le revêtement de protection incendie (12) présente des percées (14) et des poches (22) alignées dans une surface de moulage avec les percées du revêtement de protection incendie, de sorte qu'une matrice en matière plastique de l'ébauche SMC (10) pénètre à travers les percées (14) et dans les poches (22) lors du pressage.

15. Procédé de fabrication d'une structure de recouvrement selon la revendication 14, comprenant l'étape consistant à :
- appliquer une couche EMV sur le corps de base SMC (32).

16. Procédé de fabrication d'une structure de recouvrement selon la revendication 15, dans lequel l'application est un collage qui s'effectue immédiatement après le démoulage du corps de base SMC (32) à partir de l'outil SMC (1).
